# EUROPEAN PATENT APPLICATION

(11) **EP 3 528 194 A1**
(43) Date of publication of application: **21.08.2019**
(21) Application number: 16918877.8
(22) Date of filing: 12.10.2016
(51) Int. Cl.: G06Q 30/00

(54) **CROSS-BOUNDARY INTERACTIVE TRANSACTION SYSTEM AND METHOD THEREFOR**

(71) Applicant: Chu, En-Hsin, Taichung City 403 (TW)
(72) Inventor: HUANG, Yu-Tsen, Taichung City 403 (TW); HUANG, Kuan-Wei, Taichung City 403 (TW); CHU, En-Hsin, Taichung City 403 (TW)
(74) Representative: Lang, Christian
(86) International application number: PCT/CN2016/000564
(87) International publication number: WO 2018/068161

(57) **Abstract**

A crossover interactive transaction system and method includes a server, a network, portable devices and terminal devices according to the preferred embodiment of the present invention. The server is provided for a platform provider. Each of the portable devices is provided for a real customer. Each of the terminal devicesis provided for a bricks-and-mortar store. Via cables or in a wireless manner, the server communicates data with the portable devices and terminal devices via the network. Thus, in the real world, the real customers can find transactions marked in virtual stores in a virtual world and interact with the bricks-and-mortar stores and corresponding to the virtual stores. Each of the transactions includes transaction data of a site, a mission and a reward for example. The site can be a bricks-and-mortar store or a tourist's attraction. The mission can be listening to introduction of products, testing food or advertisement for example.

## Description

### BACKGROUND OF INVENTION

### 1. FIELD OF INVENTION

The present invention relates to transactions and, more particularly, to crossover interactive transaction system and method for providing data of transactions in a virtual world to facilitate the transactions in the real world.

### 2. RELATED PRIIOR ART

There are more and more mobile devices for mobile communication. Hence, there are more and more activities in the virtual world such as electronic commerce, internet communities and internet games. In electronic commerce, consumers often forma group on the internet to buy products from stores at lower prices than each of them could alone. However, without face-to-face interaction of the consumers with the stores, there are manydisputes that reduce the credibility of the transactions on the internet.

The present invention is therefore intended to obviate or at least alleviate the problems encountered in prior art.

### SUMMARY OF INVENTION

It is an objective of the present invention to provide crossover interactive transaction system and method for increasing the volume of sales and the credibility of transactions by marking transactions in virtual stores in a virtual world to guide consumers to bricks-and-mortar stores corresponding to the virtual stores with the help of a positioning technique, thereby allowing the consumers to conduct the transactions in the bricks-and-mortar stores.

To achieve the foregoing objective, the crossover interactive transaction system includes a network, a server of a platform provider, at least one portable device of the real customer, and at least one terminal device of a bricks-and-mortar store. The server includes a processing module, a communication module in communication of data with the network, a matching platform, a customer database for recording identity data of at least one real customer, a store database for recording identity data of at least one bricks-and-mortar store, and an order database for recording data of at least one transaction. The portable device includes a processing module for showing a virtual world, a wireless web communication module in communication of data with the server via the network in a wireless manner, a positioning module for positioning the customer in the real world, and an image-capturing module for capturing images of the transaction. The terminal device includes an interactive transaction module for showing the virtual world, a web communication module in communication of data with the server via the network, and a product data module for recording data of products. The server is in communication of data with the portable device and the terminal device via the network to allow the real customer to find a transaction in the real world according to a transaction marked in the virtual world, and allow the customer to react with the bricks-and-mortar store to complete the transaction in the real world, thereby combining the real world with the virtual world to guide the customer to the bricks-and-mortar store.

It is another objective of the present invention to provide crossover interactive transaction system and method for breaking through current bottlenecks of transactions and reducing disputes over transactions by providing guidance in a virtual world to lead consumers to bricks-and-mortar stores for interaction in the real world.

To achieve the foregoing objectives, the transaction method includes the steps of initiating communication, sending positioning data, searching for the bricks-and-mortar store, processing the transaction, managing the transaction and updating the data. The step of initiating the communication includes the steps of turning on the processing module and matching platform of the server, turning on the processing moduleof the portable devices if necessary, and turning on the interactive transaction module of the terminal device if necessary, thereby rendering the web communication module of the portable device and the web communication module of the terminal device in communication of data with the communication module of the server via the network. The step of sending positioning data includes the steps of using the positioning module of the portable device to send the positioning data of the real customer to the server, showing the real customer as a virtual customer in the virtual world visible in the portable device or the terminal device, using the terminal device to send the positioning data of the bricks-and-mortar store to the server and show the bricks-and-mortar store as a virtual store in the virtual world visible in the portable devices or the terminal device. The step of searching for the bricks-and-mortar store includes the steps of using the transaction processing module of the server to send the transaction via the network, showing the transaction in the virtual store in the virtual world visible in the processing module of the portable devices of the real customer, guiding the real customer to the bricks-and-mortar store or another site in the real world as the virtual customer approaching the virtual store in the virtual world visible or another virtual site in the processing module of the portable devices. The step of processing the transaction includes the steps of using the processing module and image-capturing module of the portable device for interaction via video, audio or words to complete the transaction, and sending the interaction and transaction to the matching platform of the server. The step of managing the transaction includes the steps of using the processing modules of the portable devices to send the completed transaction to the matching platform of the server. The step of updating the data by using the server to send the data of the transaction according to a request from the real customer via the portable device or from the bricks-and-mortar store via the terminal device in the real world and store the updated data of transaction in the customer database, the store database and the order database.

Other objectives, advantages and features of the present invention will be apparent from the following description referring to the attached drawing

### BRIEF DESCRIPTION OF DRAWINGS

The present invention will be described via detailed illustration of the preferred embodiment referring to the drawings wherein:
FIG. 1 is a block diagram of a cross over interactive transaction system according to the preferred embodiment of the present invention;
FIG. 2 is a perspective view of the cross over interactive transaction system shown in FIG. 1;
FIG. 3 is a front view of a mobile device of the cross over interactive transaction system shown in FIG. 2;
FIG. 4 is a scheme for mapping a real-world region in the cross over interactive transaction system shown in FIG. 1;
FIG. 5 is a flow chart of a process incorporated in the cross over interactive transaction system shown in FIG. 1; and
FIG. 6 is a front view of the movable device showing a list of consumers as a group in the cross over interactive transactionsystem shown in FIG. 1.

### DETAILED DESCRIPTION OF PREFERRED EMBODIMENT

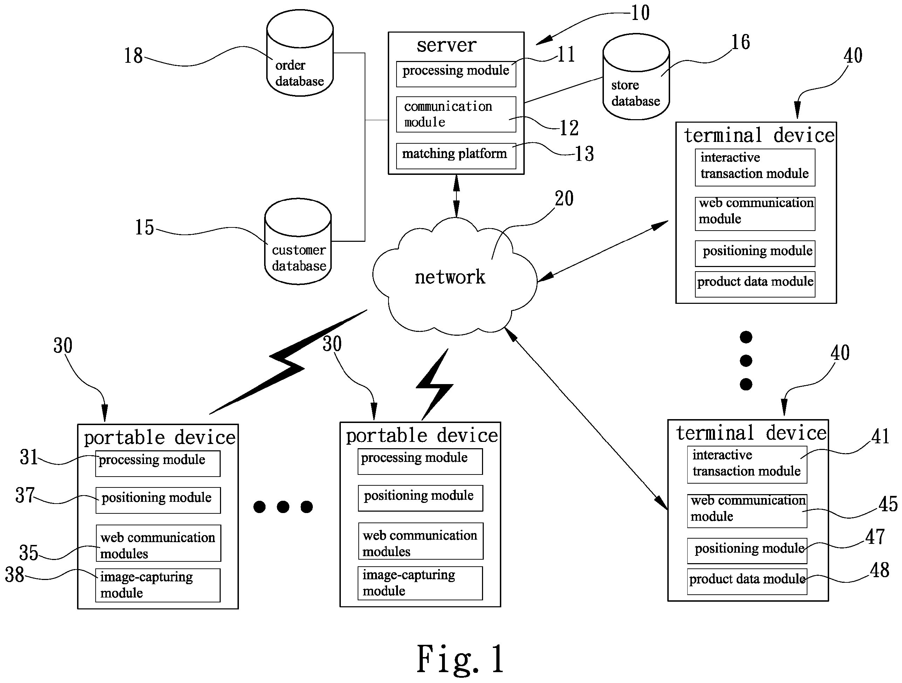

Referring to FIGS. 1 through 4, a cross over interactive transaction system includes a server 10, a network 20, portable devices 30 and terminal devices 40 according to the preferred embodiment of the present invention. The server 10 is operated by a platform provider. Each of the portable devices 30 is provided for a real customer 210A or 210B. Each of the terminal devices 40 is provided for a bricks-and-mortar store310A, 310B, 310C or 310D. By cables or in a wireless manner, the server 10 communicates data with the portable devices 30 and terminal devices 40 via the network 20. Thus, in the real world 200, the real customers 210A and 210B can find transactions marked in virtual stores in a virtual world 300 and interact with thebricks-and-mortar stores 220A, 220B, 220C and 220D corresponding to the virtual stores. Each of the transactions includes transaction data of a site, a mission and a reward for example. The site can be a bricks-and-mortar store or a tourist's attraction. The mission can be listening to introduction of products, testing food or advertisement for example. The reward can be a point, a coupon or a rebate.

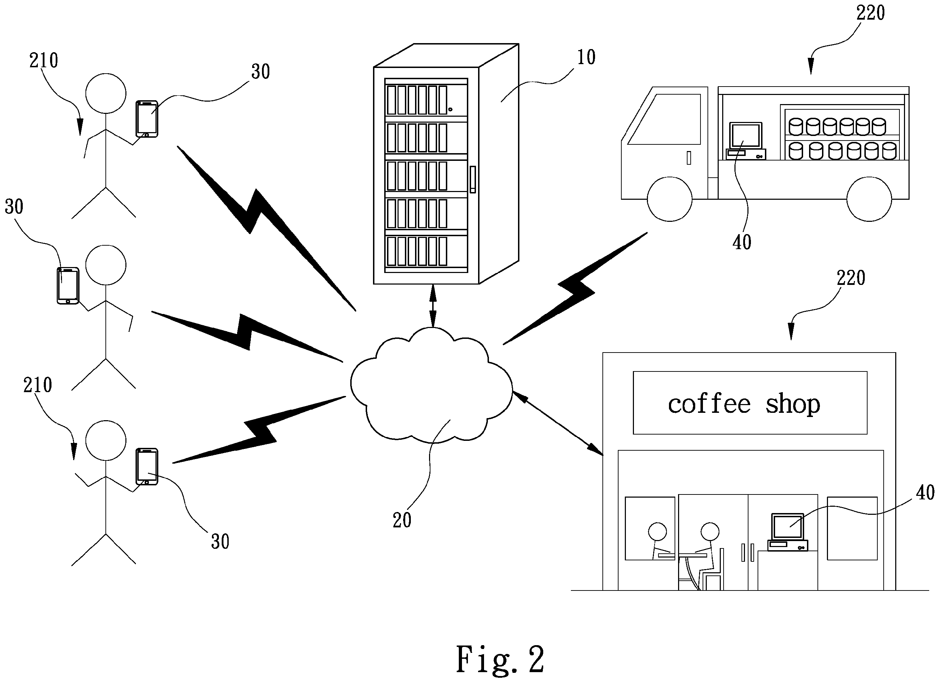

Referring to FIGS. 1 and 2, the server 10 includes a processing module 11, a communication module 12, a matching platform 13, a customer database 15, a store database 16 and an order database 18. The processing module 11, the communication module 12, the matching platform 13, the customer database 15, the store database 16 and the order database 18 are electrically connected to one another.

The processing module 11 is a built-in backstage program for checking, analyzing, comparing and processing data such as identity data of the customers 210A and 210B, identity data of the bricks-and-mortar stores 220A, 220B, 220C and 220D, positioning data, data of time or data of the transactions.

Via cables or in a wireless manner, the communication module 12 is connected to the network 20 to communicate the data with the portable devices 30 and/or the terminal devices 40.

The matching platform 13 is a built-in program to allow at least one consumer to interact with another consumer or a store by video, audio or words. The matching platform 13 further processes matching, orders, logistics and cash flow for example.

The customer database 15 records the data of the identities and positions of the realcustomers 210A and 210B. The customer database 15 further records the data of the transactions completed by the real customers and the rewards for the real customers 210A and 210B.

The store database 16 records the data of the identities and positions of the bricks-and-mortar stores 220A, 220B, 220C and 220D and the data of the missions and rewards for the real customers 210A and 210B.

The order database 18 records data of matching and transactions between the real customers 210A and 210B or between the real customers 210A and 210B and the stores. The data recorded in the order database 18 can be sent to and used in the matching platform 13 and updated.

The network 20 is operable via cables or in a wireless manner to allow the server 10 to communicate the data with the portable devices 30 and the terminal devices 40. Preferably, the network 20 is the internet.

Each of the portable devices 30 is a smart phone or a tablet computer for example. Each of the portable devices 30 includes a processing module 31, a wireless web communication module 35, a positioning module 37 and an image-capturing module 38 for example.

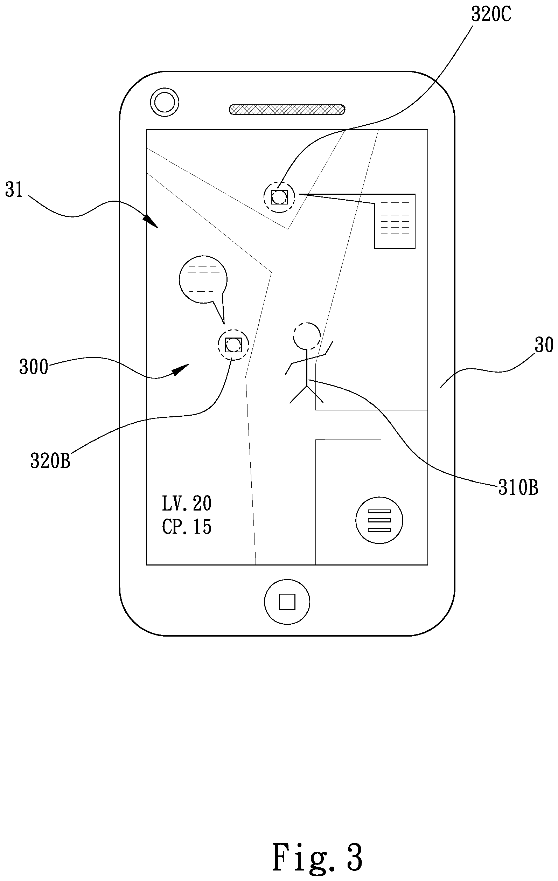

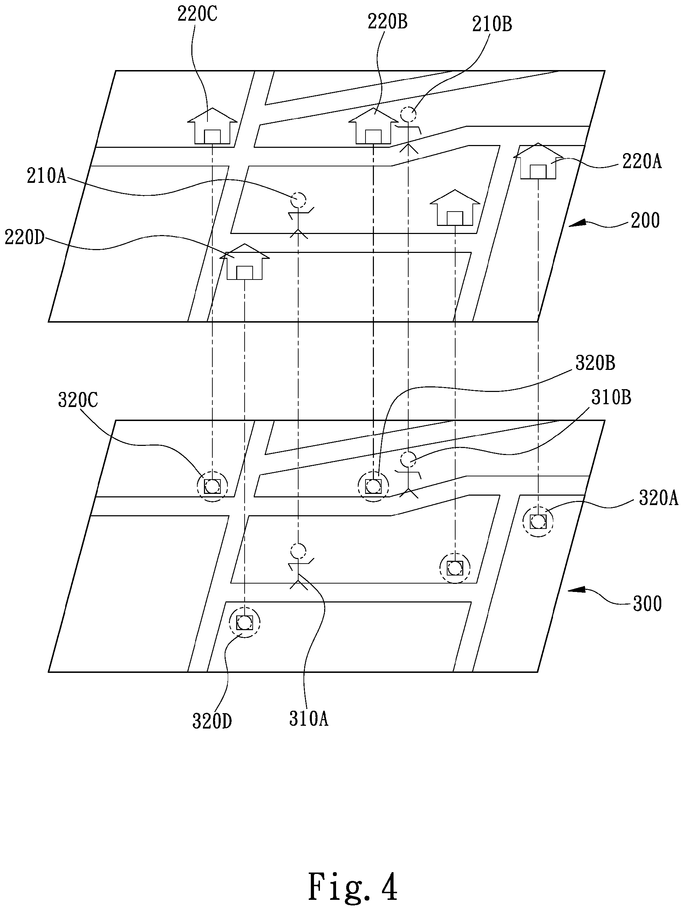

The processing module 31 is an application program built in the portable device 30. Referring to FIGS. 3 and 4, the processing module 31 includes an interface for showing a visible virtual world 300 and images of matching provided by the matching platform 13. The virtual world 300 is shown as an electronic map or a street map. The virtual world 300 is built corresponding to the real world 200, which includes buildings and roads. In the real world 200, the real customers 210A and 210B can find sites for transactions marked in the virtual stores in the virtual world 300 and complete the transactions in the real world 200.

The wireless web communication module 35 communicates the data of the real customers 210A and 210B or instructions from the bricks-and-mortar stores 220A, 220B, 220C and 220D with the server 10 via the network 20.

The positioning module 37 is made compliant to the global positioning system ("GPS") for example. The positioning module 37 and the processing module 31 guide the real customers 210A and 210B to find the bricks-and-mortar stores 220A, 220B, 220C and 220D or tourist's attractions in the real world 200.

The image-capturing module 38 is operable to capture images of consumers, stores and/or products.

Each of the terminal devices 40 is a terminal, a desktop computer or a laptop computer for example. Each of the terminal devices 40 includes an interactive transaction module 41, a web communication module 45, a positioning module 47and a product data module 48.

The interactive transaction module 41 is an application program built in the terminal device 40 and includes an interface for showing the images of the matching provided by the matching platform 13 and allowing the store to set, change and record transactions.

The web communication module 45 communicates the data of the store with the server 10 via the network 20 by cables or in a wireless manner.

The positioning module 47 and the interactive transaction module 41 are used to mark the location of the store.

The product data module 48 records data of the products offered by the store. The data of the products include descriptions and inventory for example. The data recorded in the product data module 48 can be used for the matching in the matching platform 13.

Referring to FIGS. 1 and 2, in use, the server 10 sends transactions marked in virtual stores 320A, 320B, 320C and 320D in the virtual world 300 to the portable devices 30 of the real customers 210A and 210B in the real world 200. Thus, the real customers 210A and 210B find their ways to bricks-and-mortar stores 220A, 220B, 220C and 220D corresponding to the virtual stores 320A, 320B, 320C and 320D, using positioning data recorded in the processing modules 31 of the portable devices 30. Then, the real customers 210A and 210B complete the transactions in thebricks-and-mortar stores 220A, 220B, 220C and 220D. The portable devices 30 send the positioning data and the data of the transactions for example to the server 10. Thus, the data of the transactions conducted by the real customers 210A and 210B are effectively recorded, stored, calculated and managed.

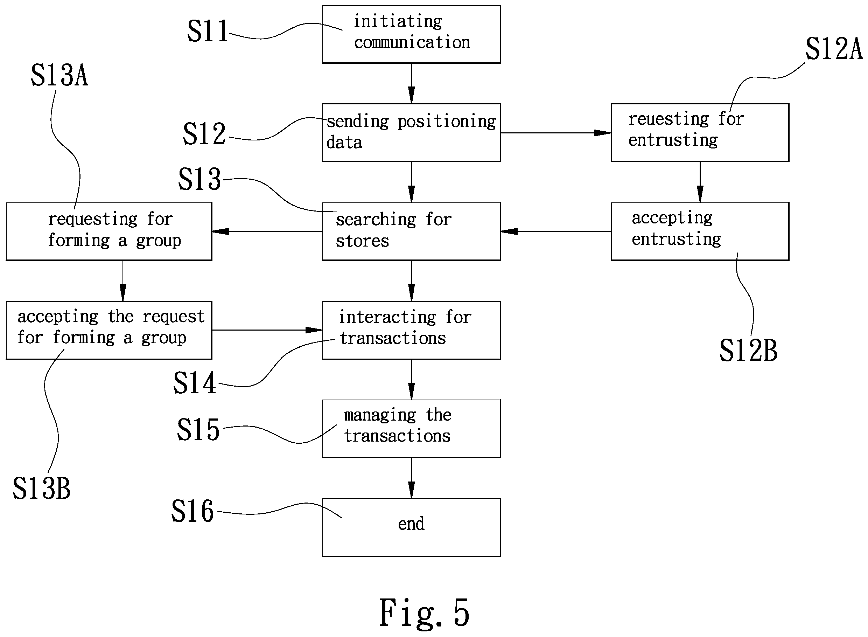

Referring to FIGS. 3 through 5, a cross over interactive transmission method will be described.

At S11, communication is initiated. The platform provider turns on the processing modules 11 and matching platforms 13 of the server 10. The real customers 210A and 210B turn on the processing modules 31 of the portable devices 30 according to their needs. The bricks-and-mortar stores 220A, 220B, 220C and 220D turn on the interactive transaction modules 41 of the terminal devices 40 according to their needs. The activated portable devices 30 and terminal devices 40 respectively use the web communication modules 35 and 45 to communicate data with the communication modules 12 of the server 10 via the network 20.

At S12, the positioning data are sent. The positioning modules 37 of the portable devices 30 of the real customers 210A and 210B position the real customers 210A and 210B. The positions of the real customers 210A and 210B are marked as the virtual customers 310A and 310B in the virtual world 300 visible in the processing modules 31 of the portable devices 30. The identity and positioning data of the virtual customers 310A and 310B are sent to the server 10 from the portable devices 30 via the network 20. Then, the processing module 11 of the server 10 processes these data. If the bricks-and-mortar stores 220A, 220B, 220C and 220D are stationary stores, their terminal devices 40 send previously set positioning data to the server 10 via the network 20, and the bricks-and-mortar stores 220A, 220B, 220C and 220D are marked as the virtual stores 320A, 320B, 320C and 320D in the virtual world 300 visible in of the processing module 11 or the interactive transaction module 41. If the bricks-and-mortar stores 220A, 220B, 220C and 220D are movable stores, their terminal devices 40 uses the positioning modules 47 to determine their positions and send their positions to the server 10. The bricks-and-mortar stores 220A, 220B, 220C and 220D are marked as the virtual stores 320A, 320B, 320C and 320D in the visual world 300.

At S13, the bricks-and-mortar stores 220A, 220B, 220C and 220D are reached. After receiving the data from the portable devices 30 of the customers 210A and 210B, the transaction processing module 11 of the server 10 analyzes and compares these data with the data recorded in the customer database 15, store database 16 and order database 18. The sever 10 sends transactions via the network 20. The transactions are marked in the virtual stores 320A, 320B, 320C and 320D in the virtual world 300 visible in the processing modules 31 of the portable devices 30 of the real customers 210A and 210B. The real customers 210A and 210B in the real world 200. Accordingly, the virtual customers 310A and 310B move in the virtual world 300 visible in the processing modules 31 of the portable devices 30. The positioning modules 37 of the portable devices 30 continue the positioning and update the positioning data so that the virtual customers 310A and 310B move toward the virtual stores 320A, 320B, 320C and 320D in the virtual world 300. Finally, the real customers 210A and 210B reaches the bricks-and-mortar stores 220A, 220B, 220C and 220D in the real world200 as the virtual customers 310A and 310B reach the virtual stores 320A, 320B, 320C and 320D in the virtual world 300.

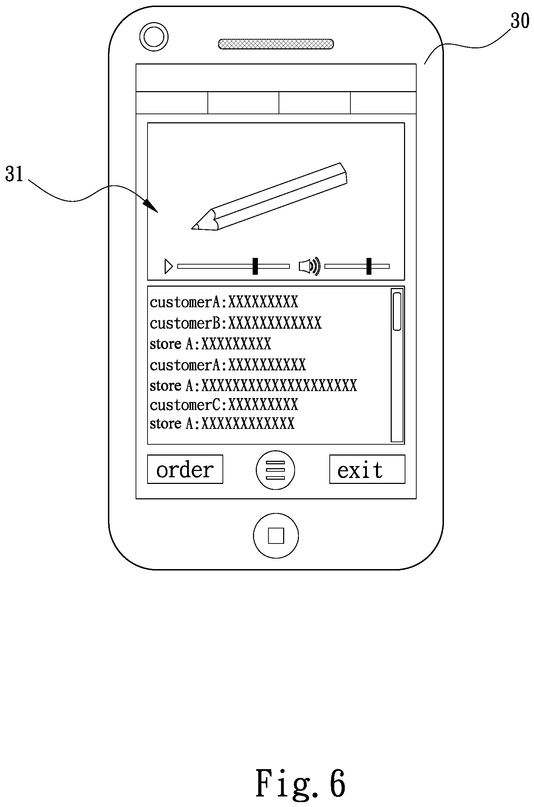

At S14, interaction and transaction. Referring to FIG. 6, the real customers 210A and 210B can use the processing modules 31 and image-capturing modules 38 of the portable devices 30 to interact with the bricks-and-mortar stores 220A, 220B, 220C and 220D by images, audio or words, and send the interaction to the of the matching platform 13 of the server 10. The bricks-and-mortar stores 220A, 220B, 220C and 220D uses the interactive transaction modules 41 of the terminal device 40 to obtain and manage the data on the matching platform 13. Finally, the real customers 210A and 210B complete the transactions in the bricks-and-mortar stores 220A, 220B, 220C and 220D in the real world 200.

At S15, the transactions are managed. When the real customers 210A and 210B complete the transactions in the bricks-and-mortar stores 220A, 220B, 220C and 220D in the real world200, they use the processing modules 31 of the portable devices 30 and the interactive transaction modules 41 of the terminal devices 40 respectively to send the data of the transactions to the matching platform 13 of the server 10. The data of the transactions are recorded and updated to facilitate the management of the transactions. If needed, the matching platform 13 can be used to conduct and manage logistics and cash flow to facilitate statistics, comparison and/or analysis in the future.

At S16, the process is finished. The server 10 receives requests from the real customers 210A and 210B via the portable devices 30 or from the bricks-and-mortar stores 220A, 220B, 220C and 220D via the terminal device 40 before its ends the updated data of the virtual customers 310A, 310B or the virtual stores 320A, 320B, 320C and 320D. Thus, the updated data are shown in the processing modules 31 of the portable devices 30 of the real customers 210A and 210B or the interactive transaction modules 41 of the terminal devices 40 of the bricks-and-mortar stores 220A, 220B, 220C and 220D. Synchronously, the updated data are recorded in the customer database15, store database16 and order database 18 of the server 10.

As discussed above, the process effectively guides the real customers 210A and 210B to reach and complete the transactions in the bricks-and-mortar stores 220A, 220B, 220C and 220D or other sites in the real world 200 while the corresponding virtual customers 310A and 310B reach the transactions in the virtual stores 320A, 320B, 320C and 320D or other sites in the virtual world 300. The data of the completed transactions are recorded in the corresponding virtual customers 310A and 310B.

Preferably, the crossover interactive transaction method further includes steps between S12 and S13.

At S12A, entrusting is requested for. A real customer 210A uses the processing module 31 of the portable device 30 thereof to request, via the network 20, the transaction processing module 11 of the server 10 for positioning a virtual customer 310B in an area. The server 10 sends the requested data to the processing module 31 of the portable device 30 of the real customer 210A and shows the requested data in the virtual world 300. Then, the real customer 210A requests the matching platform 13 of the server 10 for entrusting another real customer 210B corresponding to the virtual customer 310B with a transaction ina bricks-and-mortar store 220B where the real customer 210A cannot get to at the moment.

At S12B, the entrusting is accepted. The real customer210B uses the processing module 31 of the portable device 30 thereof to receive the request, and expresses agreement to be entrusted to the matching platform 13 of the server 10. Then, S13 and further steps are taken. Thus, the real customer 210A entrusts the customer210B for a transaction in the bricks-and-mortar stores 220B in the real world 200.

Preferably, the crossover interactive transaction method further includes steps between S13 and S14.

At S13A, formation of a group is requested for. Via the network 20, the real customers 210A and 210B can use the processing modules 31 of the portable devices 30 to request the transaction processing module 11 of the server 10 for forming a group if necessary after positioning the bricks-and-mortar stores 220A, 220B, 220C and 220D.

At S13B, a group is formed. The matching platform 13 of the server 10 evaluates authorization before it inquires the bricks-and-mortar stores 220A, 220B, 220C and 220D. The matching platform 13 can accept or reject the request from the real customers 210A and 210B for forming a group. Referring to FIG. 6, a list of consumers as a group is shown in the processing modules 31 of the portable devices 30 of the real customers 210A and 210B or the interactive transaction modules 41 of the terminal devices 40 of the bricks-and-mortar stores 220A, 220B, 220C and 220D. Then, S13 and the following steps can be taken if necessary. Other real customers who are interested in joining the real customers 210A and 210B can use the processing modules 31 of the portable devices 30 thereof to observe or take part in the group buy as virtual customers in the virtual word 300.

The present invention has been described via the illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A crossover interactive transaction system and method comprising:
a network (20);
a server (10) of a platform provider and comprising a processing module (11) for running a back-stage program to process data and execute functions, a communication module (12) in communication of data with the network (20), a matching platform (13), a customer database (15) for recording identity data of at least one real customer, a store database (16) for recording identity data of at least one bricks-and-mortar store, and an order database (18) for recording data of at least one transaction;
at least one portable device (30) provided for the real customer and comprising a processing module (31) for running an application program to execute operation and show a virtual world, a wireless web communication module (35) in communication of data with the server (10) via the network (20) in a wireless manner, a positioning module (37) for positioning the customer in the real world, and an image-capturing module (38) for capturing images of the transaction; and
at least one terminal device (40) provided for the bricks-and-mortar store and comprising an interactive transaction module (41) for running an application program to execute operation and show the virtual world, a web communication module (45)in communication of data with the server (10) via the network (20) by cables or in a wireless manner, and a product data module (48) for recording data of products;
wherein the server (10) is in communication of data with the portable device (30) and the terminal device (40) via the network (20) to allow the real customer to find a transaction in the real world according to a transaction marked in the virtual world, and allow the customer to react with the bricks-and-mortar store to complete the transaction in the real world, thereby combining the real world with the virtual world to guide the customer to the bricks-and-mortar store.

2. The crossover interactive transaction system and method according to claim 1, wherein the portable devices (30) is selected from the group consisting of a smart phone and a tablet computer.

3. The crossover interactive transaction system and method according to claim 1, wherein the terminal device (40) includes a positioning module (47) for positioning at least one movable bricks-and-mortar store.

4. A crossover interactive transaction system and method for operating the crossover interactive transaction system according to claims 1 to 3 comprising the steps of:
initiating communication by turning on the processing module (11) and matching platform (13) of the server (10), turning on the processing module (31) of the portable devices (30) if necessary, and turning on the interactive transaction module (41) of the terminal device (40) if necessary, thereby rendering the web communication module (35) of the portable device (30) and the web communication module (45) of the terminal device (40) in communication of data with the communication module (12) of the server (10) via the network (20);
sending positioning data by using the positioning module (37) of the portable device (30) to send the positioning data of the real customer to the server (10), showing the real customer as a virtual customer in the virtual world visible in the portable device (30) or the terminal device (40), using the terminal device (40) to send the positioning data of the bricks-and-mortar store to the server (10) and show the bricks-and-mortar store as a virtual store in the virtual world visible in the portable devices (30) or the terminal device (40);
searching for the bricks-and-mortar store by using the transaction processing module (11) of the server (10) to send the transaction via the network (20), showing the transaction in the virtual store in the virtual world visible in the processing module (31) of the portable devices (30) of the real customer, guiding the real customer to the bricks-and-mortar store or another site in the real world as the virtual customer approaching the virtual store in the virtual world visible or another virtual site in the processing module (31) of the portable devices (30);
processing the transaction by using the processing module (31) and image-capturing module of the portable device (30) for interaction via video, audio or words to complete the transaction, and sending the interaction and transaction to the matching platform (13) of the server (10);
managing the transaction by using the processing modules (31) of the portable devices (30) to send the completed transaction to the matching platform (13) of the server (10);
updating the data by using the server (10) to send the data of the transaction according to a request from the real customer via the portable device (30) or from the bricks-and-mortar store via the terminal device (40) in the real world and store the updated data of transaction in the customer database (15), the store database (16) and the order database (18).

5. The crossover interactive transaction system and method according to claim 4, further comprising, between the step of sending the positioning data and the step of searching for the bricks-and-mortar store, the steps of:
requesting for entrusting by using the processing module (31) of the portable device (30) of the real customer to request, via the network (20),the transaction processing module (11) of the server (10) for data of other real customers in an area, using the server (10) to send the requested data to the processing module (31) of the portable device (30), showing the requested data in the virtual world visible in the processing module (31) of the portable device (30), and using the processing module (31) of the portable device (30) to request the matching platform (13) of the server (10) for entrusting another real customer with a transaction in a bricks-and-mortar store;
answering the entrusting by using the processing module (31) of the portable devices (30) of the other real customer to receive and answer the request for entrusting.

6. The crossover interactive transaction system and method according to claims 4 and 5, further comprising the step of searching for the bricks-and-mortar store and the step of processing the transaction, the steps of:
requesting for forming a group by using the processing module (31) of the portable device (30) to request, via the network (20), the transaction processing module (11) of the server (10) for forming a group with other real customers after finding the bricks-and-mortar store; and
forming a group by using the matching platform (13) of the server (10) to accept the request for forming a group, showing the request for forming a group in the processing module (31) of the portable device (30) of the real customer or the interactive transaction module (41) of the terminal device (40) of the bricks-and-mortar store.
